# FASCICULE DE BREVET EUROPEEN

(11) **EP 2 387 681 B1**
(45) Date de publication et mention de la délivrance du brevet: **14.05.2014**
(21) Numéro de dépôt: 09804291.4
(22) Date de dépôt: 23.12.2009
(51) Int. Cl.: F16L 5/02, F16L 37/00, F16C 1/10, F16B 21/08, H02G 3/06, H01R 13/74

(54) **DISPOSITIF D'ANCRAGE D'UN ELEMENT DANS UNE OUVERTURE D'UNE PAROI ET RACCORD EQUIPE D'UN TEL DISPOSITIF**
VORRICHTUNG ZUR VERANKERUNG EINES ELEMENTS IN EINER ÖFFNUNG IN EINER WAND UND MIT SOLCH EINER VORRICHTUNG AUSGESTATTETER VERBINDER
DEVICE FOR ANCHORING AN ELEMENT IN AN OPENING IN A WALL AND CONNECTOR EQUIPPED WITH SUCH A DEVICE

(30) Priorité: 14.01.2009 FR 0900144
(43) Date de publication de la demande: 23.11.2011
(73) Titulaire: PARKER HANNIFIN MANUFACTURING France SAS, 74100 Ville-la-Grand (FR)
(72) Inventeur: LE QUERE, Philippe, F-35830 Betton (FR)
(74) Mandataire: Lavialle, Bruno François Stéphane
(86) Numéro de dépôt international: PCT/FR2009/001479
(87) Numéro de publication internationale: WO 2010/081943

(56) Documents cités:
- EP-A1- 0 374 070
- EP-A1- 1 113 553
- DE-A1- 2 226 315
- FR-A1- 2 532 381
- FR-A1- 2 703 753
- US-A- 4 822 228
- US-A- 5 772 159
- US-B1- 6 394 690

## Description

La présente invention concerne un dispositif d'ancrage d'un élément dans une ouverture d'une paroi. Cet élément est par exemple un raccord pour connecter l'un à l'autre deux organes d'un circuit de transport de fluide tels que des organes émetteurs ou récepteurs de fluide et par exemple des canalisations, un distributeur, un actionneur, un régulateur de débit ou de pression...

L'invention a également pour objet un tel raccord.

### ARRIERE PLAN DE L'INVENTION

Un dispositif d'ancrage d'un élément dans une ouverture d'une paroi ayant une première face et une deuxième face opposées l'une à l'autre comprend généralement un manchon de réception de l'élément. Le manchon est pourvu extérieurement d'un épaulement d'appui sur la première face de la paroi et d'un organe d'ancrage pour prendre appui sur la deuxième face de la paroi.

L'organe d'ancrage est par exemple constitué d'un écrou engagé sur une portion externe filetée du manchon. Ce mode d'ancrage est relativement lourd et peu pratique, et sa mise en place nécessite un certain temps. De plus, le vissage suppose de pouvoir accéder aux deux côtés de la paroi, ce qui n'est pas toujours possible par exemple lorsque la paroi délimite un réservoir. En outre, si la paroi et/ou le dispositif sont soumis à des vibrations, il existe un risque de desserrage de l'écrou affectant la tenue de la fixation.

Il a été envisagé un organe d'ancrage qui comporterait des bras élastiques ayant une extrémité libre élastiquement déplaçable entre une position en saillie latérale pour prendre appui sur la deuxième face de la paroi et une position escamotée pour permettre l'introduction du manchon dans l'ouverture. La réalisation du manchon devient alors relativement compliquée et coûteuse.

Le document US 4,822,228 se rapporte aux fixations mécaniques, en particulier en construction automobile. Une bague d'arrêt se monte dans une gorge circonférentielle d'un téton de la pièce à fixer. La bague est fermée sur toute sa circonférence et présente une forme sinueuse définie par des encoches qui partent alternativement des deux faces frontales pour pouvoir se resserrer sur elle-même dans la gorge pour l'emmanchement de la pièce puis s'élargir automatiquement après avoir franchi le perçage. A l'état détendu, dans sa fonction d'arrêt, elle prend appui par ses surfaces frontales contre le support et contre le flanc de la gorge, en interposant sa paroi latérale rigide dans la direction axiale.

### OBJET DE L'INVENTION

Un but de l'invention est de fournir un moyen permettant l'ancrage d'un élément dans une paroi de manière simple et peu coûteuse.

### RESUME DE L'INVENTION

A cet effet, on prévoit, selon l'invention, un dispositif d'ancrage d'un élément dans une ouverture d'une paroi selon la revendication 1.

Ainsi, l'organe d'accrochage est formé d'une simple rondelle tronconique reçue dans une gorge du manchon. L'organe d'accrochage et le manchon peuvent alors être fabriqués indépendamment l'un de l'autre sans entrainer de coûts de fabrication élevés, la forme de l'organe d'accrochage et la forme du manchon demeurant relativement simple. L'appui contre la zone d'intersection de la surface latérale de l'ouverture et de la deuxième surface, permet d'augmenter la résistance à l'arrachement de l'ancrage en dirigeant l'effort exercé contre la bague par la zone d'intersection vers un flanc de la gorge. En outre, la bague permet un rattrapage des jeux et s'accommode de variations de l'épaisseur de la paroi. Cet appui associé à l'élasticité de la bague permet en outre de limiter les jeux d'assemblage entre le manchon et la paroi.

De préférence, la surface inclinée de la bague tronconique est une face non perpendiculaire avec les faces principales de la bague (les faces principales se comprenant comme les surfaces intérieures et extérieures de la bague).

Selon une caractéristique particulière, la surface inclinée est lisse et la bague est agencée de manière à exercer sur le manchon un effort d'attraction de l'épaulement vers la première face.

La bague contribue ainsi à plaquer l'épaulement contre la première face.

De préférence, la bague a une extrémité de plus petite section qui présente une face s'étendant dans un plan sensiblement radial lorsque la bague est dans sa position d'accrochage pour prendre appui contre un flanc de la gorge opposée à l'épaulement.

La face de la plus petite section de la bague permet une répartition de l'effort transmis par la bague au flanc adjacent de la gorge et limite de ce fait les zones de concentration de contrainte.

Selon l'invention, la bague a une surface interne et possède une extrémité de plus petite section au voisinage de laquelle la surface interne a une portion qui est cylindrique lorsque la bague est dans sa position d'accrochage.

La portion cylindrique permet un bon centrage de la bague sur le manchon.

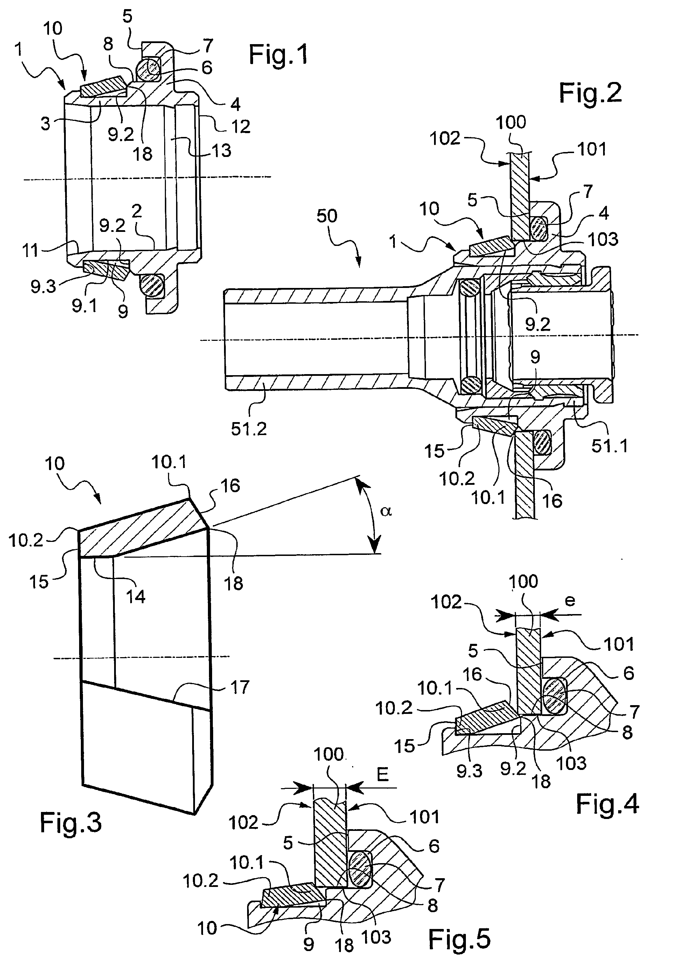

Avantageusement, une gorge plane est ménagée dans l'épaulement et reçoit le moyen d'étanchéité, par exemple un joint d'étanchéité, saillant de l'épaulement, le joint d'étanchéité étant agencé pour être compressible axialement. En effet, une compression axiale du joint d'étanchéité est réalisée selon l'invention lors de la mise en place de la traversée de la paroi (paroi d'une cloison notamment). Et c'est la surface inclinée de la bague tronconique qui permet le maintien de la déformation axiale du joint d'étanchéité et qui garantit ainsi l'étanchéité de la paroi dans la zone de son ouverture. Il est à noter qu'il est préférable, pour que la surface inclinée de la bague tronconique assure correctement son effort d'attraction de l'épaulement du manchon, que la bague soit concentrique à l'ouverture pratiquée dans la paroi, et, par conséquent, au raccord qui, lui, est centré (la portée 8 comme représentée en figure 5 et décrite plus loin en détails). Comme détaillé plus loin à l'aide des figures, c'est la surface de guidage 14 de la bague 10 (figure 3) qui permet ce positionnement coaxial.

C'est donc l'agencement de la bague tronconique selon l'invention qui permet, notamment, d'assurer l'étanchéité de l'ouverture de la paroi.

Le joint d'étanchéité peut alors être utilisé comme un moyen pour rattraper les jeux d'assemblage du manchon sur la paroi en exerçant un effort sur le manchon tendant à appliquer la plus grande section de la bague contre la zone d'intersection de la deuxième face et de la surface latérale de l'ouverture.

L'invention a également pour objet un raccord comportant un corps tubulaire qui est axialement divisé en une section de connexion d'un premier organe d'un circuit de transport de fluide et une section de connexion d'un deuxième organe du circuit de transport de fluide, et qui est associé à un manchon d'un dispositif d'ancrage présentant l'une des caractéristiques ci-dessus.

Selon deux modes de réalisation alternatifs :
- le corps est rapporté dans le manchon, le corps est emmanché à force dans le manchon, et de préférence, le manchon comprend au moins un relief de cramponnage du corps du raccord ;
- le corps est en une seule pièce avec le manchon.

D'autres caractéristiques et avantages de l'invention ressortiront à la lecture de la description qui suit de modes de réalisations particuliers non limitatifs de l'invention.

### BREVE DESCRIPTION DES DESSINS

Il sera fait référence aux dessins annexés, parmi lesquels :
- la figure 1 est une vue en coupe axiale d'un dispositif d'ancrage conforme à l'invention,
- la figure 2 est une vue analogue à la figure 1 d'un raccord équipé de ce dispositif d'ancrage,
- la figure 3 est une vue en élévation avec une demi-coupe axiale d'une bague de ce dispositif,
- les figures 4 et 5 sont des vues partielles du dispositif d'ancrage montrant l'adaptation de celui-ci à des parois d'épaisseurs différentes,
- les figures 6 et 7 sont des vues analogues aux figurent 4 et 5 d'une première variante de réalisation de la bague de ce dispositif,
- la figure 8 est une vue en élévation d'une bague selon une deuxième variante de réalisation,
- la figure 9 est une vue analogue à la figure 2 d'un raccord selon un deuxième mode de réalisation,
- la figure 10 est une vue en élévation avec une demi coupe axiale d'un raccord selon un troisième mode de réalisation,
- la figure 11, a à c, illustre l'enchaînement des opérations pour réaliser l'ancrage d'un raccord conforme à un quatrième mode de réalisation de l'invention et la figure 11d, illustre le démontage d'un tel raccord.

### DESCRIPTION DETAILLEE DE L'INVENTION

Le dispositif d'ancrage conforme à l'invention est ici décrit en application à la fixation d'un raccord généralement désigné en 50 à une paroi 100, comportant une première face 101 et une deuxième face 102 opposée. La paroi 100 est pourvue d'une ouverture 103 délimitée par une surface latérale s'étendant entre les faces 101 et 102.

En référence à la figure 2, le raccord 50 comprend un corps 51 tubulaire axialement divisé en une section 51.1 de connexion à un premier organe d'un circuit de fluide et une section 51.2 de connexion à un deuxième organe du circuit de fluide. Ces moyens de connexion sont connus en eux-mêmes et ne seront donc pas détaillés ici. Ces moyens de connexion sont agencés pour réaliser une connexion instantanée ou non, démontable ou non, des organes au raccord. Le corps 51 est pourvu extérieurement du dispositif d'ancrage.

En référence aux figures 1 à 5, le dispositif d'ancrage comprend un manchon généralement désigné 1, de forme tubulaire, délimitant un canal 2 et comportant une portion 3 qui est insérable dans l'ouverture 103 et qui s'étend en saillie d'une collerette externe 4 du manchon 1. Le canal 2 est pourvu du côté de l'extrémité libre de la portion insérable 3 d'un chanfrein d'entrée 11 du raccord 50 dans le manchon 1 et du côté de son extrémité opposée d'un rebord 12 formant une butée à l'enfoncement du raccord 50 dans le manchon 1. Un relief annulaire de cramponnage 13 s'étend dans le canal 2 au voisinage du rebord 12 pour mordre la surface externe du corps du raccord et s'opposer à un retrait de celui-ci.

La collerette externe 4 comprend une face annulaire formant épaulement 5 du côté de la portion insérable 3. Une gorge plane 6, concentrique au manchon 1, est ménagée dans l'épaulement 5 pour recevoir un joint d'étanchéité 7 saillant de l'épaulement 5.

La portion insérable 3 a une surface externe qui délimite au voisinage immédiat de la collerette 4, une portée 8 de diamètre légèrement inférieur au diamètre de l'ouverture 103. Une gorge 9 est ménagée extérieurement dans la surface externe de la portion insérable 3 du manchon 1. La gorge 9 comprend un fond 9.1 bordé par un flanc 9.2 du côté de la portée 8 et d'un flanc 9.3 du côté de l'extrémité libre de la portion insérable 3. La gorge 9 reçoit une bague généralement désignée en 10.

La bague 10 est une bague tronconique comportant une section de plus grand diamètre 10.1 et une section de plus petit diamètre 10.2. La bague 10 est ici formée d'une bande enroulée en tronc de cône de manière à présenter une fente 17 sensiblement axiale autorisant son montage élastique dans la gorge et par la suite sa déformation élastique entre un état d'ancrage, ou de repos, représenté aux figures 1 et 3, dans lequel l'extrémité de plus grande section 10.1 de la bague 10 s'étend en saillie latérale de la gorge 9 et de la portée 8, et un état déformé dans lequel l'extrémité de plus grande section 10.1 est escamotée dans la gorge 9. La bague 10 comprend, du côté de son extrémité de plus petite section 10.2, une portion de surface interne 14 cylindrique pour s'étendre en regard du fond 9.1 de la gorge 9 et maintenir la rondelle coaxiale au manchon 1. L'extrémité de plus petite section 10.2 présente également une face 15 agencée pour s'étendre radialement lorsque la bague 10 est dans son état d'ancrage ou de repos et prendre appui contre le flanc 9.3 de la gorge 9. L'extrémité de plus grande section 10.1 de la bague 10 présente une surface 16, tronconique, dont l'angle au sommet est situé du côté de l'épaulement 5 de telle manière que lorsque la bague 10 est dans son état d'ancrage la surface 16 puisse prendre appui contre une zone d'intersection de la surface latérale de l'ouverture 103 et de la face 102 de la paroi 100. La conicité de la bague 10 sera choisie plutôt faible pour limiter les efforts à fournir lors de l'installation du dispositif d'ancrage dans l'ouverture 103 et limiter également la déformation structurale de la bague 10 de manière à rester dans la limite élastique du matériau la constituant. On notera que dans la position en saillie, l'extrémité de plus grande section 10.1 a une arête 18 (formant la circonférence interne de la surface 16) qui s'étend en regard du flanc 9.2 de la gorge 9 pour éviter que lors de l'introduction du dispositif d'ancrage dans l'ouverture, la bague 10 vienne chevaucher la portée 8 interdisant alors sa déformation vers l'état escamoté.

A la figure 2, le raccord 50 est ancré dans l'ouverture 103. Lors de l'introduction du raccord 50 pourvu du dispositif d'ancrage dans l'ouverture 103, la bague 10 est dans son état déformé de sorte que l'extrémité de plus grande section 10.1 est dans sa position escamotée. Lorsque la bague 10 sort de l'ouverture 103, son élasticité la ramène vers son état d'ancrage jusqu'à ce que la surface 16 de la bague 10 soit en appui contre la zone d'intersection de la surface latérale de l'ouverture 103 et de la face 102. On comprend que le joint d'étanchéité 7 est écrasé entre le fond de la gorge 6 et la face 101 de la paroi 100 et tend élastiquement à écarter la collerette 4 de la paroi 100 renforçant le contact de la surface 16 avec la zone d'intersection de la surface latérale de l'ouverture 103 et de la face 102. Le joint d'étanchéité 7 assure une étanchéité de la liaison du dispositif d'ancrage à la paroi 100. La portée 8 assure le centrage du dispositif d'ancrage dans l'ouverture 103. La face 15 qui s'étend de façon sensiblement radiale lorsque la bague 10 est dans son état d'ancrage, permet un appui ferme de la bague 10 contre le flanc 9.3 de la gorge 9.

Aux figures 4 et 5, on peut voir que le dispositif d'ancrage conforme à l'invention s'adapte automatiquement à différentes épaisseurs e, E de parois 100. Cette adaptation est le résultat de la tronconicité de la face 16 et du retour plus ou moins important de la bague 10 vers son état d'accrochage ou de repos.

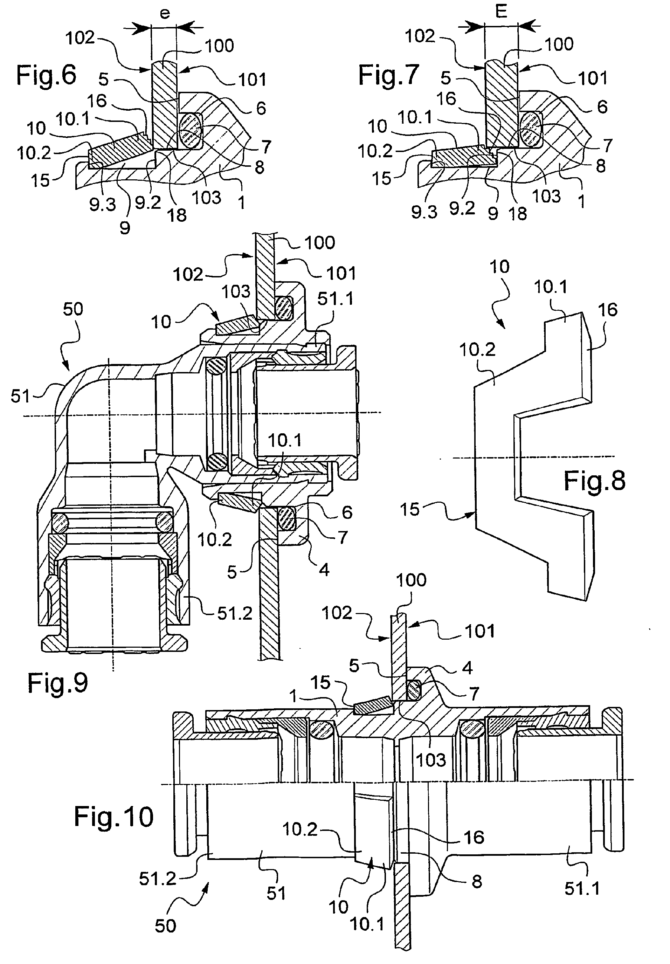

En variante, comme représentée aux figures 6 et 7, la surface 16 peut présenter un profil en escalier.

En variante, à la figure 8, la bague 10 n'est pas fendue mais a une forme partiellement crénelée facilitant son montage élastique dans la gorge et, par la suite, une déformation élastique de la bague 10 de son état d'ancrage vers son état escamoté.

Dans le deuxième mode de réalisation de la figure 9, on peut voir que le corps 51 du raccord 50 présente une forme coudée et possède à ses deux extrémités 51.1, 51.2 des moyens de connexion identiques.

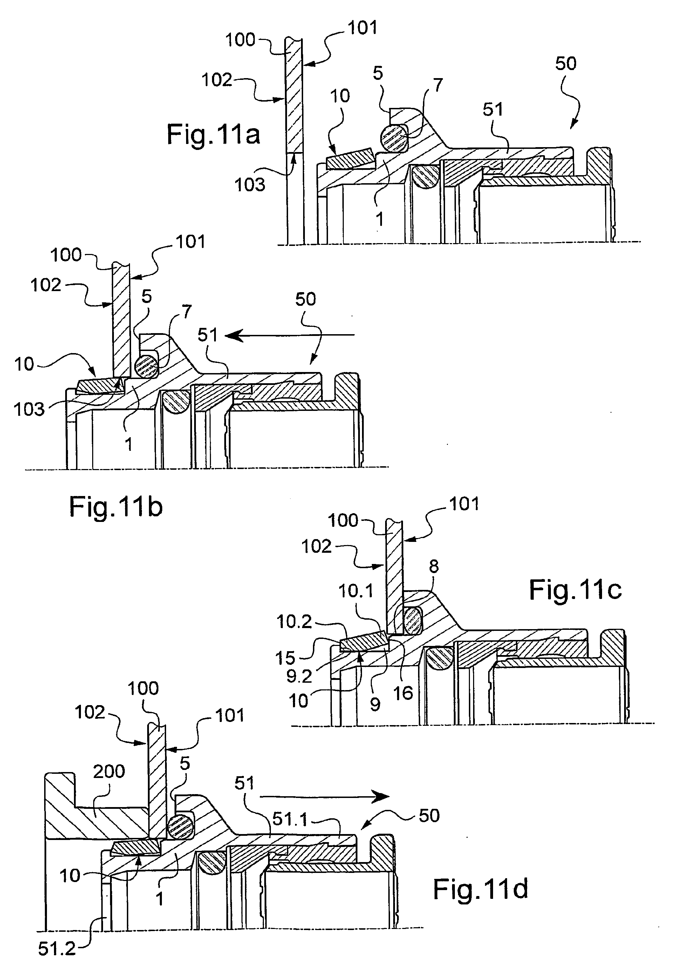

Dans le troisième et le quatrième mode de réalisation, représentés respectivement aux figures 10 et 11, le corps 51 du raccord 50 est en une seule pièce avec le manchon 1 du dispositif d'ancrage.

Le troisième mode de réalisation de la figure 10 montre un raccord ou union permettant le raccordement de deux canalisations l'une à l'autre.

Le quatrième mode de réalisation de la figure 11 montre un raccord 50 permettant de raccorder directement une canalisation à une enceinte sous pression que définit la paroi 100.

La figure 11.a montre le raccord 50 avant son introduction dans l'ouverture 103.

La figure 11.b montre le raccord 50 pendant l'introduction : la bague 10 est dans son état déformé de sorte que l'extrémité de plus grande section 10.1 est dans sa position escamotée.

La figure 11.c montre le raccord 50 quand la bague 10 est sortie de l'ouverture 103 et revient vers son état de repos sous l'effet de son élasticité. L'extrémité de plus grande section 10.1, en saillie latérale de la portée 8, prend appui par sa surface 16 contre l'intersection de la surface latérale de l'ouverture 103 et la face 102. Le joint d'étanchéité 7 est écrasé entre la face 101 et le fond de la gorge 6.

La figure 11.d montre le retrait du raccord 50 au moyen d'un outil tubulaire 200 enfilé sur la section 51.1 du corps 51, l'extrémité de plus petite section 10.2 et la bague 10 jusqu'à recouvrir l'extrémité de plus grande section 10.1 et amener cette dernière dans sa position escamotée. Le corps 51 peut alors être tiré en faisant passer la bague 10 dans l'ouverture 103.

Bien entendu, l'invention n'est pas limitée au mode de réalisation décrit et on peut y apporter des variantes de réalisation sans sortir du cadre de l'invention tel que défini par les revendications.

## Revendications

1. Dispositif d'ancrage d'un élément dans une ouverture (103) d'une paroi (100) ayant une première face (101) et une deuxième face (102) opposées l'une à l'autre, l'ouverture étant délimitée par une surface latérale s'étendant entre la première face et la deuxième face, le dispositif comportant un manchon (1) de réception de l'élément, pourvu extérieurement d'un épaulement (5) d'appui sur la première face de la paroi et d'un organe d'ancrage qui fait face à l'épaulement et qui comprend au moins une portion élastiquement déplaçable entre une position en saillie latérale et une position escamotée, ledit dispositif d'ancrage étant pourvu d'un moyen d'étanchéité de l'ouverture de la paroi, et l'organe d'ancrage étant une bague (10) tronconique reçue dans une gorge externe (9) du manchon pour avoir une extrémité de plus grande section (10.1) qui fait face à l'épaulement et qui présente une surface inclinée (16) formant ladite portion élastiquement déplaçable, pour prendre appui, dans la position en saillie latérale, contre une zone d'intersection de la surface latérale de l'ouverture et de la deuxième face, la bague (10) ayant une surface interne et possède une extrémité de plus petite section (10.2) au voisinage de laquelle la surface interne a une portion (14) qui est sensiblement cylindrique lorsque la bague est dans sa position d'accrochage, ladite portion s'étendant en regard d'un fond de la gorge (9) de manière à maintenir la bague coaxiale au manchon (1).

2. Dispositif selon la revendication 1, dans lequel la surface inclinée (16) est lisse et la bague (10) est agencée de manière à exercer sur le manchon (1) un effort d'attraction de l'épaulement (5) vers la première face (101).

3. Dispositif selon la revendication 1, dans lequel l'extrémité de plus petite section (10.2) présente une face (15) s'étendant dans un plan sensiblement radial lorsque la bague est dans sa position d'accrochage pour prendre appui contre un flanc (9.3) de la gorge (9) opposé à l'épaulement (5).

4. Dispositif selon la revendication 1, dans lequel une gorge plane (6) est ménagée dans l'épaulement (5) et reçoit le moyen d'étanchéité (7) qui est saillant de l'épaulement, le moyen d'étanchéité étant agencé pour être compressible axialement.

5. Dispositif selon la revendication 1, dans lequel la face inclinée (16) a un profil en escalier.

6. Raccord comportant un corps (50) tubulaire qui est axialement divisé en une section de connexion d'un premier organe d'un circuit de transport de fluide et une section de connexion d'un deuxième organe du circuit de transport de fluide, et qui est associé à un manchon (1) d'un dispositif d'ancrage conforme à l'une quelconque des revendications précédentes.

7. Raccord selon la revendication 6, dans lequel le corps (51) est rapporté dans le manchon (1).

8. Raccord selon la revendication 7, dans lequel le corps (51) est emmanché à force dans le manchon (1).

9. Raccord selon la revendication 8, dans lequel le manchon (1) comprend au moins un relief (13) de cramponnage du corps (51) du raccord (50).

10. Raccord selon la revendication 6, dans lequel le corps (51) est en une seule pièce avec le manchon (1).

11. Raccord selon la revendication 6, dans lequel l'extrémité de plus grande section (10.1) comporte une arête (18) qui est en regard du flanc (9.2) de la gorge (9) lorsque l'extrémité de plus grande section est dans la position en saillie.

## Patentansprüche

1. Vorrichtung zur Verankerung eines Elements in einer Öffnung (103) einer Wand (100), die eine erste Fläche (101) und eine zweite Fläche (102) hat, die einander entgegengesetzt sind, wobei die Öffnung von einer Seitenfläche begrenzt ist, die sich zwischen der ersten Fläche und der zweiten Fläche erstreckt, wobei die Vorrichtung eine Hülse (1) zur Aufnahme des Elements umfasst, die außen mit einer Schulter (5) zur Anlage an der ersten Fläche der Wand und mit einem Verankerungsorgan versehen ist, das der Schulter gegenüberliegt und mindestens einen Abschnitt umfasst, der zwischen einer seitlich vorstehenden Position und einer eingerückten Position elastisch auslenkbar ist, wobei die genannte Verankerungsvorrichtung mit Dichtungsmitteln zum Abdichten der Öffnung der Wand versehen ist und das Verankerungsorgan ein kegelstumpfförmiger Ring (10) ist, der in einer Außennut (9) der Hülse aufgenommen ist, um ein Ende (10.1) mit größerem Querschnitt zu haben, das der Schulter gegenüberliegt und eine Schrägfläche (16) aufweist, die den genannten elastisch auslenkbaren Abschnitt bildet, um in der seitlich vorstehenden Position an einem Schnittbereich der Seitenfläche der Öffnung und der zweiten Fläche zur Anlage zu kommen, wobei der Ring (10) eine Innenfläche hat und ein Ende (10.2) mit kleinerem Querschnitt aufweist, nahe dem die Innenfläche einen Abschnitt (14) hat, der im Wesentlichen zylindrisch ist, wenn der Ring in seiner Verankerungsposition ist, wobei sich der genannte Abschnitt derart gegenüber einem Boden der Nut (9) erstreckt, dass der Ring koaxial zur Hülse (1) gehalten wird.

2. Vorrichtung nach Anspruch 1, wobei die Schrägfläche (16) glatt und der Ring (10) derart angeordnet ist, dass er auf die Hülse (1) eine Kraft zum Anziehen der Schulter (5) gegen die erste Fläche (101) ausübt.

3. Vorrichtung nach Anspruch 1, wobei das Ende (10.2) mit kleinerem Querschnitt eine Fläche (15) aufweist, die sich in einer im Wesentlichen radialen Ebene erstreckt, wenn der Ring in seiner Verankerungsposition ist, um an einer der Schulter (5) gegenüberliegenden Flanke (9.3) der Nut (9) zur Anlage zu kommen.

4. Vorrichtung nach Anspruch 1, wobei in der Schulter (5) eine ebene Nut (6) ausgebildet ist, die die Dichtungsmittel (7) aufnimmt, die von der Schulter vorstehen, wobei die Dichtungsmittel so ausgebildet sind, dass sie axial komprimierbar sind.

5. Vorrichtung nach Anspruch 1, wobei die Schrägfläche (16) ein treppenförmiges Profil hat.

6. Anschlussstück, umfassend ein rohrförmiges Gehäuse (50), das axial in einen Abschnitt zum Anschluss eines ersten Organs eines Flüssigkeitstransportkreises und in einen Abschnitt zum Anschluss eines zweiten Organs des Flüssigkeitstransportkreises unterteilt ist, und das mit einer Hülse (1) einer Verankerungsvorrichtung gemäß einem der vorhergehenden Ansprüche verbunden ist.

7. Anschlussstück nach Anspruch 6, wobei das Gehäuse (51) in der Hülse (1) befestigt ist.

8. Anschlussstück nach Anspruch 7, wobei das Gehäuse (51) in die Hülse (1) eingepresst ist.

9. Anschlussstück nach Anspruch 8, wobei die Hülse (1) mindestens ein Relief (13) zum Festhaken des Gehäuses (51) des Anschlussstückes (50) hat.

10. Anschlussstück nach Anspruch 6, wobei das Gehäuse (51) einstückig mit der Hülse (1) ausgebildet ist.

11. Anschlussstück nach Anspruch 6, wobei das Ende (10.1) mit größerem Querschnitt eine Kante (18) umfasst, die sich gegenüber der Flanke (9.2) der Nut (9) befindet, wenn das Ende mit größerem Querschnitt in seiner vorstehenden Position ist.

## Claims

1. An anchor device for anchoring an element in an opening (103) in a wall (100) having a first face (101) and a second face (102) that are opposite from each other, the opening being defined by a side surface extending between the first face and the second face, the device comprising a sleeve (1) for receiving the element, which sleeve is externally provided with a shoulder (5) for bearing against the first face of the wall, and with an anchor member that faces the shoulder and that has at least one portion that is resiliently movable between a laterally projecting position and a retracted position, said anchor device being provided with sealing means for sealing the opening in the wall, and the anchor member being a frustoconical ring (10) received in a groove (9) in the outside of the sleeve so as to have an end of larger section (10.1) that faces the shoulder and that has a sloping surface (16) forming said resiliently movable portion, so as to bear, in the laterally projecting position, against a zone of intersection between the side surface of the opening and the second face, the ring (10) having an inside surface and having an end of smaller section (10.2) in the vicinity of which the inside surface has a portion (14) that is substantially cylindrical when the ring is in its attachment position, said portion extending facing an end wall of the groove (9) in order to keep the ring coaxial with the sleeve (1).

2. Device according to claim 1, wherein the sloping surface (16) is smooth and the ring (10) is arranged to exert on the sleeve (1) a force for attracting the shoulder (5) towards the first face (101).

3. Device according to claim 1, wherein the end of smaller section (102) has a face (15) extending in a substantially radial plane when the ring is in its attachment position so as to bear against a side (9.3) of the groove (9) that is further from the shoulder (5).

4. Device according to claim 1, wherein a plane groove (6) is provided in the shoulder (5) and receives the sealing means (7) that project relative to the shoulder, the sealing means being arranged to be axially compressible.

5. Device according to claim 1, wherein the sloping face (16) has a stair-shaped profile.

6. A coupling comprising a tubular body (50) that is axially subdivided into a connection segment for connecting to a first member of a fluid transport circuit, and a connection segment for connecting to a second member of the fluid transport circuit, and that is associated with a sleeve (1) of an anchor device according to claim 1.

7. Coupling according to claim 6, wherein the body (51) is mounted in the sleeve (1).

8. Coupling according to claim 7, wherein the body (51) is a force fit in the sleeve (1).

9. Coupling according to claim 8, wherein the sleeve (1) is provided with at least one piece in relief (13) for retaining the body (51) of the coupling (50) in barb-like manner.

10. Coupling according to claim 6, wherein the body (51) is formed as a single piece with the sleeve (1).

11. Coupling according to claim 6, wherein the end of larger section (10.1) has an edge (18) that faces the side (9.2) of the groove (9) when the end of larger section is in the projecting position.
